# FASCICULE DE BREVET EUROPEEN

(11) **EP 3 495 826 B1**
(45) Date de publication et mention de la délivrance du brevet: **25.11.2020**
(21) Numéro de dépôt: 17205858.8
(22) Date de dépôt: 07.12.2017
(51) Int. Cl.: G01P 15/125, G01P 1/00

(54) **DISPOSITIF ÉLECTRONIQUE DE MESURE D'UN PARAMÈTRE PHYSIQUE**
ELEKTRONISCHE VORRICHTUNG ZUM MESSEN EINES PHYSIKALISCHEN PARAMETERS
ELECTRONIC DEVICE FOR MEASURING A PHYSICAL PARAMETER

(43) Date de publication de la demande: 12.06.2019
(73) Titulaire: EM Microelectronic-Marin SA, 2074 Marin (CH)
(72) Inventeur: Grosjean, Sylvain, 25500 Les Fins (FR); Tao, Yonghong, 518164 Singapore (SG); Deschildre, Alexandre, 2074 Marin (CH); Blangy, Hugues, 1543 Grandcour (CH)
(74) Mandataire: ICB SA

(56) Documents cités:
- US-A1- 2004 237 651
- US-A1- 2008 302 182
- US-A1- 2010 219 848

## Description

### Domaine technique

La présente invention concerne le domaine des dispositifs électroniques de mesure d'un paramètre physique, en particulier un accéléromètre du type capacitif.

### Arrière-plan technologique

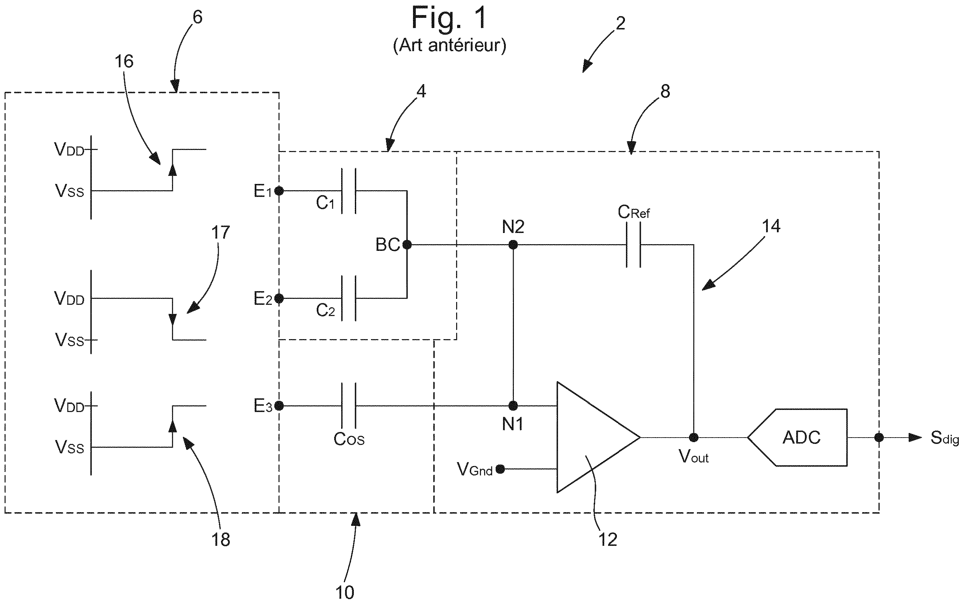

En référence à la Figure 1 annexée, on décrira un dispositif électronique de mesure d'un paramètre physique tel qu'on en trouve sur le marché. Ce dispositif de mesure 2 comprend :
- un capteur analogique 4 comprenant un composant électrique différentiel passif formé de deux capacités C1 & C2 de sensiblement même valeur, la valeur électrique fournie en sortie du composant électrique, à la borne commune BC des deux capacités, variant en fonction du paramètre physique détecté, notamment une accélération,
- un circuit d'excitation 6 du capteur analogique fournissant au composant électrique différentiel passif deux signaux électriques d'excitation inverses 16 et 17 qui sont respectivement appliqués périodiquement aux deux capacités pour effectuer des mesures successives du paramètre physique,
- un circuit de mesure 8 comprenant un amplificateur 12 qui, associé à une boucle de rétroaction 14 formant ce circuit de mesure, génère en sortie une tension électrique Vₒᵤₜ qui est une fonction déterminée, notamment souhaitée proportionnelle, de la valeur du composant électrique différentiel passif, et
- un circuit de compensation 10 d'un offset éventuel du capteur analogique 4, ce circuit de compensation étant formé d'une capacité de compensation Cos qui est excitée par le circuit d'excitation 6, ce dernier fournissant à la capacité de compensation Cos un signal électrique d'excitation 18.

Les signaux électriques d'excitation 16, 17 et 18 consistent en des transitions entre une tension inférieure / basse Vss de l'alimentation électrique et une tension supérieure / haute V_{DD} de cette alimentation électrique (V_{DD} définissant la tension d'alimentation), ces transitions étant appliquées respectivement aux entrées E1, E2 et E3. Plus précisément, le signal 16 présente des transitions de Vss à V_{DD} alors que simultanément le signal 17 présente des transitions de V_{DD} à Vss. Ainsi, le signal électrique résultant à la borne commune BC des deux capacités C1 et C2 a une composante variable qui est proportionnelle à la différence des valeurs respectives de ces deux capacités, soit proportionnelle à - CMEMS avec CMEMS = C2-C1.

Il est connu que les capteurs du type MEMS, notamment les capteurs à capacité différentielle, présentent avec les technologies de fabrication classiques une assez large dispersion de leurs offsets respectifs. Ainsi, il a été prévu une capacité Cos de compensation d'un offset, laquelle est programmable. Sa programmation est effectuée généralement lors du test du dispositif électronique de mesure. Si l'offset est négatif, c'est-à-dire C_{MENS} présente une valeur négative pour une valeur nulle du paramètre physique détecté (par exemple une accélération nulle pour un accéléromètre), alors le signal électrique d'excitation 18 est sélectionné avec une transition descendante. Par contre, si l'offset est positif, le signal 18 est sélectionné avec une transition montante de V_{DD} vers Vss comme prévu à la figure 1.

La capacité Cos reçoit simultanément au capteur 4 un signal électrique d'excitation 18 qui consiste en une transition entre Vss et V_{DD}. Comme les nœuds N1 et N2 sur la boucle de rétroaction 14 sont maintenus à la tension de référence V_{Gnd} par l'amplificateur 12 et cette boucle de rétroaction, la capacité de référence C_{Ref} agencée sur la boucle de rétroaction présente une tension variable dont la valeur est proportionnelle à la somme des tensions générées, d'une part, par le capteur 4 et, d'autre part, par le circuit de compensation. Ainsi, la capacité C_{Ref} présente une tension qui est proportionnelle à C_{MENS} - Cos. La tension de la capacité de référence C_{Ref} définit la tension analogique de sortie Vₒᵤₜ qui est donc proportionnelle à C_{MEMS} - Cos et également proportionnelle au paramètre physique mesuré dans la mesure où l'offset du capteur est entièrement corrigé par le circuit de compensation. Le circuit de mesure 8 fournit en sortie un signal de mesure digital S_{dig} au moyen d'un convertisseur analogique-digital ADC, ce signal digital étant théoriquement proportionnel au paramètre physique mesuré.

Le document US 2008/302182 A1 décrit un accéléromètre associé en sortie à un circuit de compensation en température du signal de mesure fourni par l'accéléromètre. Ce circuit de compensation est formé par une pluralité de résistances dont les valeurs respectives dépendent de la température. Il est alimenté par la tension d'alimentation du dispositif électronique et il ne reçoit aucun signal d'excitation pour son fonctionnement. Ce circuit de compensation est donc entièrement passif, avec toutefois la possibilité de sélectionner au préalable un coefficient de dépendance à la température, approprié à l'accéléromètre concerné, pour le signal de tension variable qu'il fournit. Les résistances sont sélectionnées et agencées de manière à permettre au circuit de compensation de fournir, dès qu'il est alimenté par la tension d'alimentation, une tension de compensation qui varie de manière linéaire avec la température, cette tension de compensation étant fournie à un circuit d'amplification du signal de mesure généré par l'accéléromètre.

Le document US 2004/0237651 A1 décrit un capteur d'une valeur physique variable, notamment d'une accélération ou d'une vitesse angulaire, qui comprend un composant électrique différentiel formé de deux capacités et en outre un circuit de correction d'un offset dans le signal fourni par le composant électrique différentiel. Le circuit de correction est agencé du côté de la sortie du capteur, en aval d'un circuit d'amplification et d'un circuit de filtrage du signal de mesure fourni par le composant électrique différentiel

Le document US 2010/0219848 A1 décrit un capteur d'une valeur physique variable associé à un circuit de compensation pour compenser l'offset causé par le vieillissement du capteur.

### Résumé de l'invention

L'invention a pour objectif d'augmenter la précision du dispositif de mesure de l'art antérieur décrit précédemment en diminuant sa dépendance à la température tout en conservant un coût de fabrication relativement faible.

Le capteur différentiel décrit précédemment peut présenter une certaine dépendance à la température, mais il se trouve que l'élément dont la dépendance en température induit la plus grande dérive en température dans le signal de mesure est la capacité Cos de compensation de l'offset, surtout si on s'en tient à une technologie commune usuelle pour réaliser cette capacité. On notera que la variation de la valeur de la capacité Cos en fonction de la température dépend de la technologie de fabrication du circuit de mesure et en particulier du circuit de compensation qui forment généralement ensemble avec le circuit d'excitation un seul et même circuit intégré. Dans le cadre de l'invention, on cherche ainsi premièrement à compenser la dérive en température de la capacité C_{OS}, mais l'invention permet aussi de tenir compte d'une éventuelle dérive en température du capteur, ce qui est très avantageux.

A cet effet, l'invention concerne un dispositif électronique de mesure d'un paramètre physique comprenant :
- un capteur analogique formé d'un composant électrique différentiel passif dont la valeur varie en fonction du paramètre physique,
- un circuit d'excitation du capteur analogique agencé pour fournir au composant électrique différentiel passif au moins un premier signal électrique d'excitation,
- un circuit de mesure comprenant un amplificateur qui, associé à une boucle de rétroaction formant ce circuit de mesure, est prévu pour générer en sortie une tension électrique qui est une certaine fonction de ladite valeur dudit composant électrique différentiel passif, et
- un circuit de compensation d'un offset dudit composant électrique différentiel passif, ce circuit de compensation étant formé d'un premier composant électrique passif, ledit circuit d'excitation étant agencé pour fournir à ce premier composant électrique passif un deuxième signal électrique d'excitation ;
ce dispositif électronique étant caractérisé en ce que ledit circuit d'excitation est agencé de manière à pouvoir fournir à un composant électrique du circuit de compensation un signal électrique d'excitation ayant une dépendance affine ou une dépendance linéaire à la température absolue avec un facteur de proportionnalité déterminé, le facteur de proportionnalité étant sélectionné de manière à compenser une dérive en température d'un ensemble électrique du dispositif de mesure comprenant au moins le premier composant électrique passif.

Dans une variante de réalisation avantageuse, l'ensemble électrique comprend en outre le composant électrique différentiel passif formant le capteur.

Dans un premier mode de réalisation, le composant électrique du circuit de compensation dont la dérive en température est compensée est ledit premier composant électrique passif et le signal électrique d'excitation est donc ledit deuxième signal électrique d'excitation. Selon l'invention, le deuxième signal électrique d'excitation a une valeur / amplitude qui est une fonction affine de la température absolue.

Dans un deuxième mode de réalisation, le composant électrique du circuit de compensation dont la dérive en température est compensée est un deuxième composant électrique passif qui est incorporé dans le circuit de compensation. Le signal électrique d'excitation qui est appliqué à ce deuxième composant électrique est un troisième signal électrique d'excitation dont l'amplitude est sensiblement une fonction linéaire de la température absolue, le deuxième signal électrique d'excitation fourni au premier composant électrique passif étant un signal d'amplitude constante.

Le dispositif électronique de mesure selon l'invention présente plusieurs avantages. En particulier, l'invention est avantageuse en ce qu'elle propose une compensation du type analogique avec des éléments électriques aisément réalisables, en particulier le circuit de compensation peut être réalisé entièrement dans la même technologie que le circuit de mesure. En effet, l'homme du métier penserait en premier lieu à corriger une dérive en température au niveau de la technologie de fabrication du circuit de mesure, notamment en utilisant une technologie MiM pour réaliser la capacité de compensation d'offset. Mais une telle solution est coûteuse. Une autre solution qui peut venir à l'esprit de l'homme du métier est une correction implémentée dans un circuit logique recevant le signal S_{dig}, mais une telle solution pose entre autre le problème de la détermination de la température à laquelle est soumis le circuit analogique de mesure.

Par contre, la solution selon l'invention est moins onéreuse et elle ne demande pas de capteur de température fournissant un signal de température à un circuit logique. La compensation de la dérive en température est effectuée au travers d'une tension variable générée à cet effet par le circuit d'excitation qui comprend par exemple une source de courant proportionnelle à la température absolue, connue de l'homme du métier, cette source de courant permettant de générer une certaine tension également proportionnelle à la température absolue qui est appliquée soit au composant de compensation d'offset (premier mode de réalisation), soit à un composant additionnel dédié à la compensation de la dérive en température du composant de compensation d'offset (deuxième mode de réalisation).

### Brève description des figures

L'invention sera décrite ci-après de manière plus détaillée à l'aide des dessins annexés, donnés à titre d'exemples nullement limitatifs, dans lesquels :
- La figure 1, déjà décrite, représente le schéma électronique d'un dispositif de mesure d'un paramètre physique du type à capacité différentielle de l'art antérieur, ce dispositif servant notamment d'accéléromètre.
- La figure 2 représente le schéma électronique d'un premier mode de réalisation selon l'invention,
- La figure 3 montre le graphe d'une tension VPTAT appliquée à une capacité du circuit de compensation pour corriger une dérive en température,
- La figure 4 montre un schéma électrique d'un circuit de génération de la tension V_{PTAT} permettant de varier le coefficient de proportionnalité entre cette tension et la température, et
- La figure 5 représente le schéma électronique d'un deuxième mode de réalisation selon l'invention.

### Description détaillée de l'invention

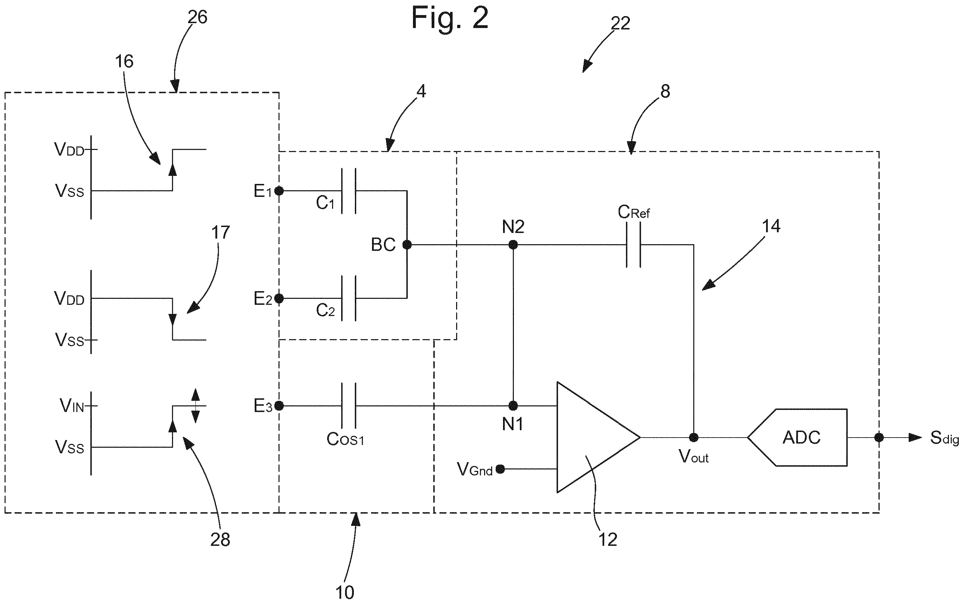

A l'aide des Figures 2 à 4, on décrira ci-après un premier mode de réalisation d'un dispositif électronique de mesure d'un paramètre physique, en particulier un accéléromètre.

Comme le dispositif de mesure de l'art antérieur décrit précédemment, le dispositif de mesure 22 comprend :
- un capteur analogique 4 formé d'une capacité différentielle, c'est-à-dire d'une paire de capacités C1, C2 qui sont agencées en parallèle et prévues avec des valeurs identiques, ces deux capacités étant excitées par des signaux inversés 16, 17, appliqués respectivement aux deux entrées E1 et E2, de manière à fournir à la borne de sortie commune BC un signal électrique correspondant à une différence entre les deux signaux électriques respectifs générés par les deux capacités et dont la valeur varie en fonction du paramètre physique considéré,
- un circuit d'excitation 26 du capteur analogique fournissant aux deux entrées E1 et E2 de la capacité différentielle C2 - C1 les deux signaux électriques d'excitation 16, 17,
- un circuit de mesure 8 comprenant un amplificateur 12 qui, associé à une boucle de rétroaction 14 formant ce circuit de mesure, génère en sortie une tension électrique Vₒᵤₜ qui est une fonction déterminée de la valeur du signal électrique fourni par le capteur analogique 4, et
- un circuit 10 de compensation d'un offset du capteur analogique, ce circuit de compensation étant formé d'une capacité de compensation Cos1 qui est excitée par le circuit d'excitation 26.

Les deux capacités C1 et C2 ont leur borne commune BC qui est reliée à la boucle de rétroaction 14 et via celle-ci à une première entrée de l'amplificateur 12, cet amplificateur ayant une deuxième entrée qui reçoit une tension de référence V_{Gnd} (tension de terre). L'amplificateur maintient la tension de référence à la borne commune BC. Comme exposé précédemment, la boucle de rétroaction 14 comprend une capacité de référence C_{Ref} qui détermine la valeur de la tension électrique de sortie Vₒᵤₜ de l'amplificateur, cette tension Vₒᵤₜ définissant le signal analogique de mesure engendré par le circuit de mesure 8 qui reçoit un premier signal électrique du capteur 4 et un deuxième signal électrique du circuit de compensation 10. Le signal analogique de mesure est ensuite fourni à un convertisseur ADC qui le convertit en un signal digital S_{dig}. La capacité programmable Cos1 a une borne, définissant la borne de sortie du circuit de compensation, qui est reliée à ladite première entrée dudit amplificateur 12 et ainsi également à la boucle de rétroaction 14. Plus précisément, la borne de sortie du circuit de compensation est directement reliée à un nœud N1 de la boucle de rétroaction, alors que la borne commune BC du capteur 4 est directement reliée à un nœud N2 de cette boucle de rétroaction, les nœuds N1 et N2 étant de préférence directement reliés entre eux, comme représenté à la Figure 2, et formant électriquement un seul et même nœud.

Selon l'invention, le circuit d'excitation 26 est agencé de manière à pouvoir fournir au capteur analogique 4 deux signaux électriques 16 et 17 présentant une amplitude maximale (transition de tension prévue entre Vss et V_{DD} et inversement) et à une borne d'entrée E3 de la capacité de compensation Cos1 un signal électrique d'excitation 28 présentant une transition en tension entre la tension d'alimentation inférieure Vss et une tension variable V_{IN}, cette dernière ayant une dépendance affine à la température absolue. En d'autres termes, le signal électrique d'excitation 28 a une valeur / une amplitude qui est une fonction affine de la température absolue.

La composante de la tension V_{IN} qui est variable en fonction de la température a un facteur de proportionnalité déterminé, lequel est sélectionné de manière à compenser une dérive en température d'un ensemble électrique du dispositif de mesure 22 comprenant au moins la capacité de compensation Cos1. Dans une variante avantageuse, l'ensemble électrique compensé en température comprend en outre le capteur différentiel 4.

La composante constante du signal V_{IN} est prévue de manière que l'offset du capteur analogique 4 soit compensé à une certaine température, par exemple 25°C. Il y a deux variantes possibles pour compenser précisément l'offset. Soit on prévoit une capacité de compensation Cos1 de valeur fixe et on ajuste la composante constante du signal électrique d'excitation de cette capacité, soit on prévoit une composante constante du signal électrique d'excitation de la capacité Cos1 avec une valeur fixe, par exemple 90% de V_{DD}, et la capacité Cos1 est prévue programmable.

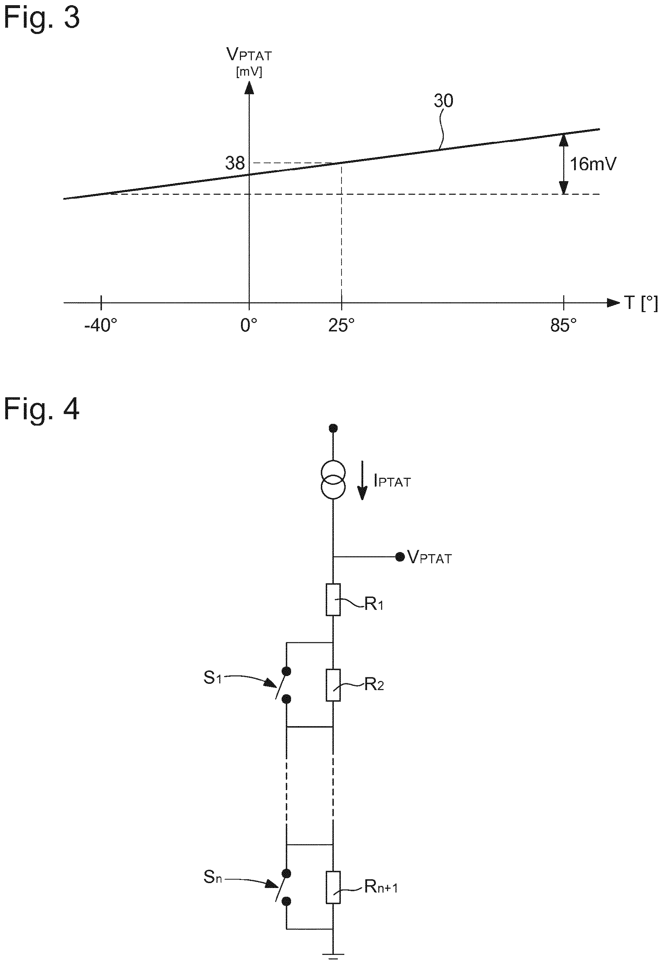

La composante variable VPTAT de la tension V_{IN} est prévue proportionnelle à la température absolue. La fonction affine 30 sur une échelle de température exprimée en degré Celsius [°C] est représentée à la Figure 3 pour un cas typique. La tension VPTAT a une valeur d'environ 38 mV à 25°C et elle varie, avec une pente positive, d'environ 16 mV pour une variation de température de 125°C (-40°C à 85°C). La pente positive prévue ici sert à compenser un coefficient négatif de la capacité de compensation pour la dépendance de sa valeur électrique en fonction de la température. Dans cet exemple, la tension VPTAT engendre une augmentation de la composante constante, raison pour laquelle elle est prévue inférieure à la tension d'alimentation V_{DD} qui est la plus haute tension disponible. A titre d'exemple, V_{DD} vaut 1 Volt et V_{IN} = 0,9 Volt + VPTAT. Par contre, si la dépendance en température de la capacité Cos1 est positive, alors on prévoit pour VPTAT des valeurs négatives avec une pente négative. Dans ce dernier cas, on peut sélectionner pour la composante constante de la tension V_{IN} la tension d'alimentation V_{DD} puisque la composante variable est négative et vient donc diminuer la composante constante. On remarquera que, pour un capteur donné, la valeur de la capacité Cos1 n'est pas identique à celle de de la capacité Cos prévue dans l'art antérieur à la Figure 1, car si la valeur de la capacité Cos est prévue pour compenser l'offset du capteur par exemple à 25°C pour une transition de tension entre Vss et V_{DD}, la tension appliquée à la capacité Cos1 lors de la transition de tension du signal 28 est inférieure à V_{DD}. Ainsi la capacité Cos1 a dans ce cas une valeur supérieure à celle de la capacité Cos pour produire à 25°C la même compensation.

La Figure 4 montre une partie du circuit d'excitation 26 agencée pour générer la tension variable V_{PTAT} de la Figure 3. On intègre dans le circuit d'excitation une source de courant I_{PTAT} fournissant un courant variant proportionnellement avec la température absolue. Une telle source de courant est connue de l'homme du métier. Elle est obtenue seulement par un design électronique particulier qui a pour conséquence que la source de courant fournit intrinsèquement un courant dont la valeur est proportionnelle à la température absolue. C'est donc une caractéristique naturelle du circuit électronique qui résulte des propriétés des transistors MOS et/ou bipolaires. Pour engendrer la tension variable VPTAT avec une pente qui puisse être sélectionnée précisément en fonction de la dépendance en température de la capacité de compensation, il est prévu plusieurs résistances commutables R₂ à Rₙ₊₁ (commandées par des interrupteurs S₁ à Sₙ) agencées en série avec une première résistance R1. Le courant variable I_{PTAT} passe ainsi au travers de la résistance R1 et des autres résistances qui sont sélectionnées.

De manière générale, dans le premier mode de réalisation, la capacité de compensation de l'offset du capteur présente également une fonction de compensation ou correction d'une dérive en température de cette capacité de compensation en association avec un signal d'excitation spécifique prévu variable en fonction de la température.

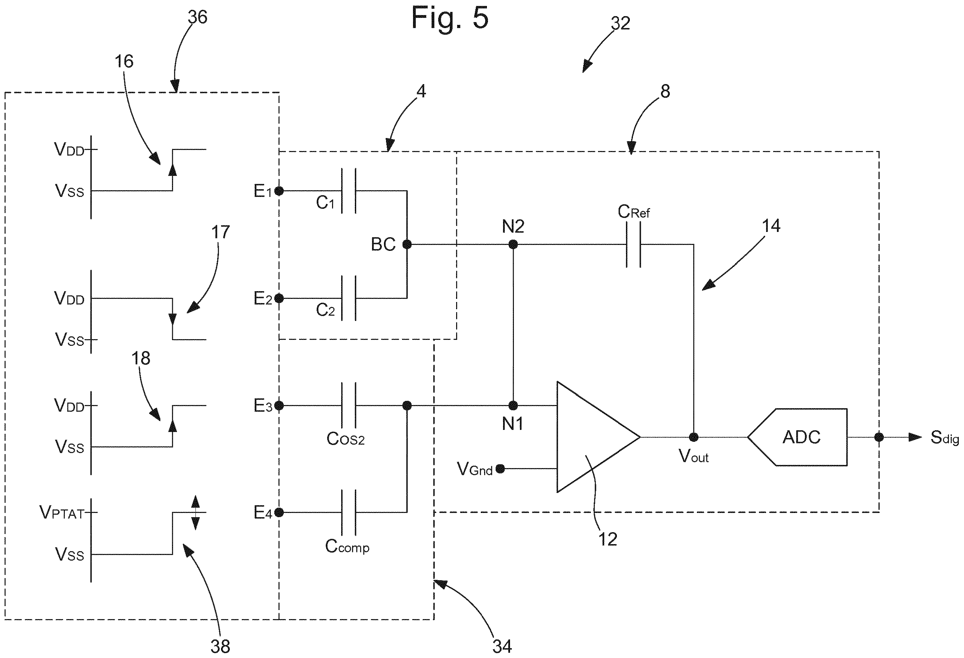

En référence à la Figure 5, on décrira ci-après un deuxième mode de réalisation de l'invention. Les éléments similaires à ceux du premier mode de réalisation et portant de mêmes références ne seront pas à nouveau décrits ici. Le dispositif de mesure 32 se différencie du dispositif de mesure 22 décrit précédemment par l'agencement du circuit de compensation 34 et du circuit d'excitation 36. Le dispositif de mesure 32 se distingue du dispositif de mesure 22 par le fait que la compensation de l'offset du capteur via la capacité Cos2 et la compensation de la dérive en température de cette capacité Cos2 sont séparées. Plus précisément, la capacité programmable Cos2 reçoit, comme dans l'art antérieur représenté en Figure 1, un signal d'excitation formé par une transition entre les tensions Vss et V_{DD}, c'est-à-dire entre les deux tensions d'alimentation fixes. On remarquera cependant que la valeur de cette capacité programmable, pour un capteur analogique 4 donné, n'est pas identique à celle de l'art antérieur car il est prévu une capacité additionnelle C_{comp} pour compenser la dérive en température de la capacité programmable Cos2. Ainsi, dans l'art antérieur, la valeur de la capacité Cos est sélectionnée pour compenser l'offset par exemple à une température de 25°C, alors que la valeur de la capacité Cos2 est de fait sélectionnée pour compenser un offset à une température correspondant sensiblement au zéro absolu (-273°C).

Comme indiqué ci-avant, pour compenser la dérive en température de la capacité programmable Cos2, il est prévu une capacité additionnelle C_{comp} dans le circuit de compensation 34. Cette capacité additionnelle reçoit un propre signal d'excitation 38 qui consiste en une transition de tension entre la tension Vss et une tension VPTAT, ce signal étant généré par le circuit d'excitation simultanément aux autres signaux électriques 16, 17 et 18. La capacité additionnelle C_{comp} peut être prévue de même valeur que celle de la capacité Cos2, mais ceci n'est pas nécessaire. Ce qui importe, c'est la valeur de la charge électrique générée lors de l'application du signal d'excitation 38, à savoir le résultat de la valeur de la capacité C_{comp} multipliée par la tension VPTAT, ce résultat devant compenser la variation de la charge électrique fournie par la capacité Cos2 en fonction de la température. La capacité additionnelle C_{comp} peut être prévue programmable ou non. La tension V_{PTAT} correspond par exemple au graphe 30 de la Figure 3, éventuellement avec un autre coefficient de proportionnalité, et sa génération peut être effectuée comme représenté à la Figure 4, avec une sélection du coefficient de proportionnalité. On notera que si la dépendance en température de la capacité Cos2 est positive de sorte que la compensation de cette dépendance doit être négative, on agencera alors le dispositif de mesure 32 de manière que le signal d'excitation 38 consiste en une transition entre V_{DD} et V_{DD} + VPTAT avec VPTAT ayant une valeur négative. On comprendra que ces considérations s'appliquent au cas d'une transition de Vss à V_{DD} dans le signal 18 appliqué à la capacité Cos2 ; sinon c'est l'inverse qui intervient.

De manière générale, dans le deuxième mode de réalisation, le signal électrique d'excitation fourni à la capacité de compensation d'une dérive en température est un signal dont l'amplitude est sensiblement une fonction linéaire de la température absolue, alors que le signal électrique d'excitation fourni à la capacité de compensation d'un offset du capteur est un signal d'amplitude constante.

Divers avantages de l'invention sont :
- Une compensation / correction de la dépendance en température du dispositif de mesure, le capteur analogique compris ou non.
- Les éléments prévus pour la compensation en température sont tous intégré dans le circuit électronique de mesure associé au capteur analogique.
- La compensation en température est prévue ajustable.
- Quasi aucun impact négatif sur la consommation électrique du dispositif de mesure.
- Quasi aucun bruit généré dans le signal par la compensation en température.
- Les divers éléments prévus pour la compensation en température ne nécessitent pas l'utilisation de technologies spéciales et onéreuses.
- L'augmentation de surface du circuit intégré formant le dispositif de mesure est marginale.
- Dans une variante évoluée, non seulement la dépendance en température de la capacité de compensation d'un offset du capteur peut être corrigée, mais également celle d'un ensemble comprenant le capteur et cette capacité de compensation.

Finalement, on notera que l'invention peut s'appliquer par analogie à un dispositif de mesure du type résistif avec un capteur formé d'une résistance différentielle, à savoir de deux résistances en parallèle.

## Revendications

1. Dispositif électronique (22; 32) de mesure d'un paramètre physique comprenant :
- un capteur analogique (4) formé d'un composant électrique différentiel passif (C1, C2) dont la valeur varie en fonction du paramètre physique,
- un circuit d'excitation (26 ; 36) du capteur analogique agencé pour fournir au composant électrique différentiel passif au moins un premier signal électrique d'excitation (16, 17),
- un circuit de mesure (8) comprenant un amplificateur (12) qui, associé à une boucle de rétroaction (14) formant ce circuit de mesure, est prévu pour générer en sortie une tension électrique (Vₒᵤₜ) qui est une certaine fonction de ladite valeur dudit composant électrique différentiel passif, et
- un circuit (10) de compensation d'un offset dudit composant électrique différentiel passif, ce circuit de compensation (10) comprenant un premier composant électrique passif (Cos1 ; Cos2), ledit circuit d'excitation (26 ; 36) étant agencé pour fournir à ce premier composant électrique passif un deuxième signal électrique d'excitation (28 ; 18),
**caractérisé en ce que** ledit circuit d'excitation est agencé de manière à pouvoir fournir à un composant électrique (Cos1 ; C_{comp}) du circuit de compensation (10) un signal électrique d'excitation ayant une dépendance affine ou une dépendance linéaire à la température absolue avec un facteur de proportionnalité déterminé, le facteur de proportionnalité étant sélectionné de manière à compenser une dérive en température d'un ensemble électrique du dispositif de mesure comprenant au moins le premier composant électrique passif du circuit de compensation.

2. Dispositif électronique de mesure selon la revendication 1, **caractérisé en ce que** ledit ensemble électrique comprend en outre ledit composant électrique différentiel passif (C1, C2).

3. Dispositif électronique de mesure selon la revendication 1 ou 2, **caractérisé en ce que** ledit composant électrique, agencé de manière à recevoir ledit signal électrique d'excitation ayant une dépendance affine ou une dépendance linéaire à la température absolue, est ledit premier composant électrique passif (Cos1) et ledit signal électrique d'excitation, ayant une dépendance affine ou une dépendance linéaire à la température absolue, est ledit deuxième signal électrique d'excitation ; et **en ce que** le deuxième signal électrique d'excitation (28) a une amplitude qui est une fonction affine de la température absolue.

4. Dispositif électronique de mesure selon la revendication 1 ou 2, **caractérisé en ce que** ledit composant électrique, agencé de manière à recevoir ledit signal électrique d'excitation ayant une dépendance affine ou une dépendance linéaire à la température absolue, est un deuxième composant électrique passif (C_{comp}); et **en ce que** ledit signal électrique d'excitation, ayant une dépendance affine ou une dépendance linéaire à la température absolue, est un troisième signal électrique d'excitation (38) dont l'amplitude est sensiblement une fonction linéaire de la température absolue, le deuxième signal électrique d'excitation (18), qui est destiné au premier composant électrique passif (Cos2), étant un signal d'amplitude constante.

5. Dispositif électronique de mesure selon la revendication 3, **caractérisé en ce que** ledit composant électrique différentiel passif est formé d'une première capacité (C1) et d'une deuxième capacité (C2) qui sont agencées en parallèle, le premier signal électrique d'excitation (16) étant destiné à la première capacité alors qu'un troisième signal électrique (17), inverse du premier signal électrique et susceptible d'être généré par le circuit d'excitation, est fourni à la deuxième capacité.

6. Dispositif électronique de mesure selon la revendication précédente, **caractérisé en ce que** les première et deuxième capacités (C1, C2) ont une borne commune (BC) reliée à la bouche de rétroaction (14) et à une première entrée de l'amplificateur (12), cet amplificateur ayant une deuxième entrée qui reçoit une tension de référence, notamment une tension de terre (V_{Gnd}), laquelle est appliquée à ladite borne commune par l'amplificateur et la boucle de rétroaction; et **en ce que** la boucle de rétroaction comprend une capacité de référence (C_{Ref}), laquelle détermine la valeur de ladite tension électrique de sortie (Vₒᵤₜ) de l'amplificateur, cette valeur étant sensiblement proportionnelle à la valeur dudit paramètre physique.

7. Dispositif électronique de mesure selon la revendication précédente, **caractérisé en ce que** le premier composant électrique passif est une capacité programmable (Cos1) de compensation de l'offset et d'une dérive en température dudit ensemble électrique, cette capacité programmable ayant une borne qui est reliée à la première entrée dudit amplificateur.

8. Dispositif électronique de mesure selon la revendication 4, **caractérisé en ce que** ledit composant électrique différentiel passif est formé d'une première capacité (C1) et d'une deuxième capacité (C2) qui sont agencées en parallèle, le premier signal électrique d'excitation (16) étant destiné à la première capacité alors qu'un quatrième signal électrique (17), inverse du premier signal électrique et susceptible d'être généré par le circuit d'excitation, est destiné à la deuxième capacité.

9. Dispositif électronique de mesure selon la revendication précédente, **caractérisé en ce que** les première et deuxième capacités ont une borne commune (BC) reliée à la boucle de rétroaction (14) et à une première entrée de l'amplificateur (12), cet amplificateur ayant une deuxième entrée qui reçoit une tension de référence, notamment une tension de terre (V_{Gnd}), laquelle est appliquée à ladite borne commune par l'amplificateur et la boucle de rétroaction; et **en ce que** la boucle de rétroaction comprend une capacité de référence (C_{Ref}), laquelle détermine la valeur de ladite tension électrique de sortie (Vₒᵤₜ) de l'amplificateur, cette valeur étant sensiblement proportionnelle à la valeur dudit paramètre physique.

10. Dispositif électronique de mesure selon la revendication précédente, **caractérisé en ce que** le premier composant électrique passif est une capacité programmable (Cos2) de compensation de l'offset avec une borne qui est reliée à la première entrée dudit amplificateur ; et **en ce que** le deuxième composant électrique passif (C_{comp}) est une capacité de compensation d'une dérive en température dudit ensemble électrique.

## Patentansprüche

1. Elektronische Vorrichtung (22; 32) zum Messen eines physikalischen Parameters, umfassend:
- einen analogen Messwertaufnehmer (4), der von einer elektrischen passiven Differentialkomponente (C1, C2) gebildet wird, deren Wert in Abhängigkeit von dem physikalischen Parameter variiert,
- eine Erregerschaltung (26; 36) des analogen Messwertaufnehmers, die angeordnet ist, um der elektrischen passiven Differentialkomponente mindestens ein erstes elektrisches Erregersignal (16, 17) zu liefern,
- eine Messschaltung (8), umfassend einen Verstärker (12), der, zugehörig zu einer Rückkopplungsschleife (14), die diese Messschaltung bildet, vorgesehen ist, um am Ausgang eine elektrische Spannung (Vₒᵤₜ) zu erzeugen, die eine gewisse Abbildung des Werts der elektrischen passiven Differentialkomponente ist, und
- eine Kompensationsschaltung (10) eines Offsets der elektrischen passiven Differentialkomponente, wobei diese Kompensationsschaltung (10) eine erste elektrische passive Komponente (Cos1; Cos2) umfasst, wobei die Erregerschaltung (26; 36) angeordnet ist, um dieser ersten elektrischen passiven Komponente ein zweites elektrisches Erregersignal (28; 18) zu liefern,
**dadurch gekennzeichnet, dass** die Erregerschaltung so angeordnet ist, dass sie einer elektrischen Komponente (Cos1; C_{comp}) der Kompensationsschaltung (10) ein elektrisches Erregersignal liefern kann, das eine affine Abhängigkeit oder eine lineare Abhängigkeit zu der absoluten Temperatur mit einem bestimmten Proportionalitätsfaktor aufweist, wobei der Proportionalitätsfaktor so ausgewählt wird, dass er eine Temperaturabweichung einer elektrischen Einheit der Messvorrichtung kompensiert, umfassend mindestens die erste elektrische passive Komponente der Kompensationsschaltung.

2. Elektronische Messvorrichtung nach Anspruch 1, **dadurch gekennzeichnet, dass** die elektrische Einheit des Weiteren die elektrische passive Differentialkomponente (C1, C2) umfasst.

3. Elektronische Messvorrichtung nach Anspruch 1 oder 2, **dadurch gekennzeichnet, dass** die elektrische Komponente, die so angeordnet ist, dass sie das elektrische Erregersignal empfängt, das eine affine Abhängigkeit oder eine lineare Abhängigkeit zu der absoluten Temperatur aufweist, die erste elektrische passive Komponente (Cos1) ist und das elektrische Erregersignal, das eine affine Abhängigkeit oder eine lineare Abhängigkeit zu der absoluten Temperatur aufweist, das zweite elektrische Erregersignal ist; und dadurch, dass das zweite elektrische Erregersignal (28) eine Amplitude aufweist, die eine affine Abbildung der absoluten Temperatur ist.

4. Elektronische Messvorrichtung nach Anspruch 1 oder 2, **dadurch gekennzeichnet, dass** die elektrische Komponente, die so angeordnet ist, dass sie das elektrische Erregersignal empfängt, das eine affine Abhängigkeit oder eine lineare Abhängigkeit zu der absoluten Temperatur aufweist, eine zweite elektrische passive Komponente (C_{comp}) ist; und dadurch, dass das elektrische Erregersignal, das eine affine Abhängigkeit oder eine lineare Abhängigkeit zu der absoluten Temperatur aufweist, ein drittes elektrisches Erregersignal (38) ist, dessen Amplitude im Wesentlichen eine lineare Abbildung der absoluten Temperatur ist, wobei das zweite elektrische Erregersignal (18), das für die erste elektrische passive Komponente (Cos2) bestimmt ist, ein Signal mit konstanter Amplitude ist.

5. Elektronische Messvorrichtung nach Anspruch 3, **dadurch gekennzeichnet, dass** die elektrische passive Differentialkomponente von einer ersten Kapazität (C1) und von einer zweiten Kapazität (C2) gebildet wird, die parallel angeordnet sind, wobei das erste elektrische Erregersignal (16) für die erste Kapazität bestimmt ist, während ein drittes elektrisches Signal (17), das zum ersten elektrischen Signal umgekehrt ist und von der Erregerschaltung erzeugt werden kann, an die zweite Kapazität geliefert wird.

6. Elektronische Messvorrichtung nach dem vorstehenden Anspruch, **dadurch gekennzeichnet, dass** die erste und zweite Kapazität (C1, C2) eine gemeinsame Klemme (BC) aufweisen, die mit der Rückkopplungsschleife (14) und mit einem ersten Eingang des Verstärkers (12) verbunden ist, wobei dieser Verstärker einen zweiten Eingang aufweist, der eine Referenzspannung empfängt, insbesondere eine Erdungsspannung (V_{Gnd}), die an die gemeinsame Klemme durch den Verstärker und die Rückkopplungsschleife angelegt wird; und dadurch, dass die Rückkopplungsschleife eine Referenzkapazität (C_{Ref}) umfasst, die den Wert der elektrischen Ausgangsspannung (Vₒᵤₜ) des Verstärkers bestimmt, wobei dieser Wert im Wesentlichen proportional ist zu dem Wert des physikalischen Parameters.

7. Elektronische Messvorrichtung nach dem vorstehenden Anspruch, **dadurch gekennzeichnet, dass** die erste elektrische passive Komponente eine programmierbare Kapazität (Cos1) zur Kompensation des Offsets und einer Temperaturabweichung der elektrischen Einheit ist, wobei diese programmierbare Kapazität eine Klemme aufweist, die mit dem ersten Eingang des Verstärkers verbunden ist.

8. Elektronische Messvorrichtung nach Anspruch 4, **dadurch gekennzeichnet, dass** die elektrische passive Differentialkomponente von einer ersten Kapazität (C1) und von einer zweiten Kapazität (C2) gebildet wird, die parallel angeordnet sind, wobei das erste elektrische Erregersignal (16) für die erste Kapazität bestimmt ist, während ein viertes elektrisches Signal (17), das zum ersten elektrischen Signal umgekehrt ist und von der Erregerschaltung erzeugt werden kann, für die zweite Kapazität bestimmt ist.

9. Elektronische Messvorrichtung nach dem vorstehenden Anspruch, **dadurch gekennzeichnet, dass** die erste und zweite Kapazität eine gemeinsame Klemme (BC) aufweisen, die mit der Rückkopplungsschleife (14) und mit einem ersten Eingang des Verstärkers (12) verbunden ist, wobei dieser Verstärker einen zweiten Eingang aufweist, der eine Referenzspannung empfängt, insbesondere eine Erdungsspannung (V_{Gnd}), die an die gemeinsame Klemme durch den Verstärker und die Rückkopplungsschleife angelegt wird; und dadurch, dass die Rückkopplungsschleife eine Referenzkapazität (C_{Ref}) umfasst, die den Wert der elektrischen Ausgangsspannung (Vₒᵤₜ) des Verstärkers bestimmt, wobei dieser Wert im Wesentlichen proportional ist zu dem Wert des physikalischen Parameters.

10. Elektronische Messvorrichtung nach dem vorstehenden Anspruch, **dadurch gekennzeichnet, dass** die erste elektrische passive Komponente eine programmierbare Kapazität (Cos2) zur Kompensation des Offsets ist, mit einer Klemme, die mit dem ersten Eingang des Verstärkers verbunden ist; und dadurch, dass die zweite elektrische passive Komponente (C_{comp}) eine Kapazität zur Kompensation einer Temperaturabweichung der elektrischen Einheit ist.

## Claims

1. Electronic device (22; 32) for measuring a physical parameter comprising:
- an analogue sensor (4) formed from a passive differential electrical component (C1, C2), the value of which varies as a function of the physical parameter,
- an excitation circuit (26; 36) of the analogue sensor arranged in order to provide, to the passive differential electrical component, at least one first electrical excitation signal (16, 17),
- a measuring circuit (8) comprising an amplifier (12) which, connected to a feedback loop (14) forming this measuring circuit, is provided in order to generate, at output, an electrical voltage (Vₒᵤₜ) which is a certain function of said value of said passive differential electrical component, and
- a circuit (10) for compensating for an offset of said passive differential electrical component, this compensation circuit (10) comprising a first passive electrical component (Cos1; Cos2), said excitation circuit (26 ; 36) being arranged in order to provide, to this first passive electrical component, a second electrical excitation signal (28; 18) ;
**characterised in that** said excitation circuit is arranged in order to be able to provide to an electrical component (Cos1; C_{comp}) of the compensation circuit (10) an electrical excitation signal having an affine dependence or a linear dependence on the absolute temperature with a determined proportionality factor, the proportionality factor being selected in order to compensate for a drift in temperature of an electrical assembly of the measuring device comprising at least the first passive electrical component of the compensation circuit.

2. Electronic measuring device according to claim 1, **characterised in that** said electrical assembly comprises furthermore said passive differential electrical component (C1, C2).

3. Electronic measuring device according to claim 1 or 2, **characterised in that** said electrical component, arranged so as to receive said electrical excitation signal having an affine dependence or a linear dependence on the absolute temperature, is said first passive electrical component (Cos1) and said electrical excitation signal, having an affine dependence or a linear dependence on the absolute temperature, is said second electrical excitation signal; and **in that** the second electrical excitation signal (28) has an amplitude which is an affine function of the absolute temperature.

4. Electronic measuring device according to claim 1 or 2, **characterised in that** said electrical component, arranged so as to receive said electrical excitation signal having an affine dependence or a linear dependence on the absolute temperature, is a second passive electrical component (C_{comp}); and **in that** said electrical excitation signal, having an affine dependence or a linear dependence on the absolute temperature, is a third electrical excitation signal (38), the amplitude of which is substantially a linear function of the absolute temperature, the second electrical excitation signal (18), which is intended for the first passive electrical component (Cos2), being a constant amplitude signal.

5. Electronic measuring device according to claim 3, **characterised in that** said passive differential electrical component is formed from a first capacitance (C1) and from a second capacitance (C2) which are arranged in parallel, the first electrical excitation signal (16) being intended for the first capacitance, whilst a third electrical signal (17), inverted relative to the first electrical signal and able to be generated by the excitation circuit, is supplied to the second capacitance.

6. Electronic measuring device according to the preceding claim, **characterised in that** the first and second capacitances (C1, C2) have a common terminal (BC) which is connected to the feedback loop (14) and to a first input of the amplifier (12), this amplifier having a second input which receives a reference voltage, in particular an earth voltage (V_{Gnd}), which is applied to said common terminal by the amplifier and the feedback loop; and **in that** the feedback loop comprises a reference capacitance (C_{Ref}) which determines the value of said electrical output voltage (Vₒᵤₜ) of the amplifier, this value being substantially proportional to the value of said physical parameter.

7. Electronic measuring device according to the preceding claim, **characterised in that** the first passive electrical component is a programmable capacitance (Cos1) for compensating for the offset and for a drift in temperature of said electrical assembly, this programmable capacitance having a terminal which is connected to the first input of said amplifier.

8. Electronic measuring device according to claim 4, **characterised in that** said passive differential electrical component is formed from a first capacitance (C1) and from a second capacitance (C2) which are arranged in parallel, the first electrical excitation signal (16) being intended for the first capacitance, whilst a fourth electrical signal (17), inverted relative to the first electrical signal and able to be generated by the excitation circuit, is intended for the second capacitance.

9. Electronic measuring device according to the preceding claim, **characterised in that** the first and second capacitances have a common terminal (BC) which is connected to the feedback loop (14) and to a first input of the amplifier (12), this amplifier having a second input which receives a reference voltage, in particular an earth voltage (V_{Gnd}), which is applied to said common terminal by the amplifier and the feedback loop; and **in that** the feedback loop comprises a reference capacitance (C_{Ref}) which determines the value of said electrical output voltage (Vₒᵤₜ) of the amplifier, this value being substantially proportional to the value of said physical parameter.

10. Electronic measuring device according to the preceding claim, **characterised in that** the first passive electrical component is a programmable capacitance (Cos2) for compensating for the offset with a terminal which is connected to the first input of said amplifier; and **in that** the second passive electrical component (C_{comp}) is a capacitance for compensating for a drift in temperature of said electrical assembly.
